# EUROPÄISCHE PATENTSCHRIFT

(11) **EP 3 954 007 B1**
(45) Veröffentlichungstag und Bekanntmachung des Hinweises auf die Patenterteilung: **22.03.2023**
(21) Anmeldenummer: 20718546.3
(22) Anmeldetag: 30.03.2020
(51) Int. Cl.: H02B 1/056, H02B 1/06, H02B 1/20

(54) **STROMSAMMELSCHIENENSYSTEM MIT MINDESTENS EINER IN EINEM BERÜHRUNGSSCHUTZGEHÄUSE GEHALTENEN STROMSAMMELSCHIENE**
BUSBAR SYSTEM WITH AT LEAST ONE BUSBAR RETAINED IN A TOUCH PROOF HOUSING
SYSTÈME DE JEU DE BARRES AVEC AU MOINS UNE BARRE RETENUE DANS UN BOÎTIER DE PROTECTION DE CONTACT

(30) Priorität: 11.04.2019 DE 102019109629
(43) Veröffentlichungstag der Anmeldung: 16.02.2022
(73) Patentinhaber: Rittal GmbH & Co. KG, 35745 Herborn (DE)
(72) Erfinder: TEMME, Stefan, 35764 Sinn-Fleisbach (DE); BASTIAN, Andreas, 35690 Dillenburg (DE); JAKOB, Ann-Sylvia, 35641 Schöffengrund (DE); KAYMA, Jörg, 35745 Herborn (DE); KREILING, Jörg, 35745 Herborn-Burg (DE)
(74) Vertreter: Angerhausen, Christoph
(86) Internationale Anmeldenummer: PCT/DE2020/100257
(87) Internationale Veröffentlichungsnummer: WO 2020/207531

(56) Entgegenhaltungen:
- EP-A2- 0 753 916
- EP-A2- 2 461 440
- DE-U1-202005 017 650

## Beschreibung

Die Erfindung geht aus von einem Stromsammelschienensystem mit mindestens einer Stromsammelschiene, die berührungssicher und über Kontaktierungsdurchlässe für elektrische Geräte und/oder Geräteadapter zugänglich in einem Berührungsschutzgehäuse aufgenommen ist, wobei das Berührungsschutzgehäuse ein Unterteil und ein auf dem Unterteil lösbar festgelegtes Oberteil aufweist, zwischen denen die mindestens eine Stromsammelschiene gehalten ist. Ein derartiges Stromsammelschienensystem ist aus der WO 2017/182033 A1 bekannt. Ein ähnliches System beschreiben auch die EP 2 461440 A2, die DE 20 2005 017 650 U1, die EP 1864 361 B1 und die EP 3 258 558 B1.

Die aus dem Stand der Technik bekannten Stromsammelschienensysteme haben den Nachteil, dass sie vergleichsweise kompliziert in der Handhabung sind, insbesondere in der Erstmontage und im Falle jeder nachträglichen Änderung des Stromsammelschienensystems, beispielsweise wenn das Stromsammelschienensystem erweitert und dabei etwa mindestens eine Stromsammelschiene durch eine Stromsammelschiene mit größerer Länge ausgetauscht werden muss. Für die Montage wird das Unterteil in einem ersten Schritt auf der Auflage, beispielsweise einer vertikal im Schaltschrankgehäuse angeordneten Montageplatte montiert, so dass zu der Vorderseite des Unterteils die Formschlussaufnahmen für die Stromsammelschienen frei zugänglich sind. Danach können die Stromsammelschienen in die Formschlussaufnahmen eingesetzt und das Oberteil auf das Unterteil aufgesetzt werden, so dass die Schienen zwischen Ober- und Unterteil aufgenommen sind. Daraufhin müssen das Oberteil und das Unterteil derart zueinander ausgerichtet werden, so dass entsprechende Schraubdurchlässe von Ober- und Unterteil miteinander fluchten und das Oberteil und das Unterteil über eine Mehrzahl Schrauben miteinander verschraubt werden können. Erst dann ist eine sichere Fixierung der Stromsammelschienen zwischen dem Oberteil und dem Unterteil erreicht. Insbesondere die Verschraubung des Oberteils auf dem Unterteil bei in das Unterteil eingesetzten Stromsammelschienen und unter Beibehaltung der Ausrichtung von Oberteil und Unterteil zueinander ist für eine einzige Person häufig mit Komplikationen verbunden.

Es ist daher die Aufgabe der Erfindung, ein Stromsammelschienensystem der eingangs beschriebenen Art derart weiterzuentwickeln, dass es sowohl eine einfache Erstmontage erlaubt und im Übrigen auch die Erweiterung gegenüber den aus dem Stand der Technik bekannten Systemen erleichtert.

Diese Aufgabe wird durch ein Stromsammelschienensystem mit den Merkmalen des Anspruchs 1 gelöst. Der nebengeordnete Anspruch 14 betrifft ein entsprechendes Verfahren für die Installation eines Stromsammelschienensystems und die abhängigen Ansprüche betreffen jeweils vorteilhafte Ausführungsformen der Erfindung.

Demgemäß ist bei einem Stromsammelschienensystem vorgesehen, dass das Oberteil an seiner dem Unterteil zugewandten Seite eine Mehrzahl sich von dieser in das Unterteil hinein erstreckender Steckaufnahmen und das Unterteil mindestens einen Schieber mit mindestens einer und vorzugsweise mehreren Rastklinken aufweist, der zwischen einer Verriegelungsposition, in der die mindestens eine Rastklinke in die Steckaufnahme eingreift, und einer Freigabeposition, in der die mindestens eine Rastklinke der Steckaufnahme vorgelagert ist, verstellbar ist, wobei das Unterteil je Stromsammelschiene ein Hakenelement aufweist, das die jeweilige Stromsammelschiene an dem Unterteil vorfixiert.

Das erfindungsgemäße Stromsammelschienensystem unterscheidet sich von den aus dem Stand der Technik Bekannten Systemen funktional insbesondere darin, dass das Oberteil werkzeuglos auf dem Unterteil festgelegt und damit die mindestens eine Stromsammelschiene und vorzugsweise mehrere dieser zwischen den beiden Teilen gehalten werden können. Sollten es die zu erwartenden Lasten der über die mindestens eine Stromsammelschiene auf das Schienensystem eingehängten elektrischen Geräte erfordern, so kann gegebenenfalls nach der Verriegelung des Oberteils an den Unterteilen in der zuvor beschriebenen Weise zusätzlich mindestens eine Schraubverbindung vorgesehen sein, über die zumindest das Oberteil an dem Unterteil und vorzugsweise das Oberteil über das Unterteil mit der Auflage, vorzugsweise einer Montageplatte, verschraubt werden kann.

Der Schieber kann eine Mehrzahl Rastklinken aufweisen, die mit ihrem jeweiligen freien Ende in eine Vorschubrichtung des Schiebers von der Freigabeposition in die Verriegelungsposition zeigen. Die mindestens eine Rastklinke kann L-förmig ausgebildet sein und mit einer ersten, vorzugsweise der kürzeren ihrer beiden Seiten an einer geraden Schieberplatte des Schiebers festgelegt sein. Der Schieber kann über eine Nut des Unterteils in das Unterteil eingesetzt sein, die zu einer Montageseite des Unterteils, über welche das Unterteil auf der Auflage, insbesondere der Montageplatte festgelegt werden kann, offen ist. Andererseits können die Steckaufnahmen mit ihren freien Enden in die Nut hineinragen, so dass die Rastklinken durch Verlagern des Schiebers entlang der Nut in oder entgegen der Vorschubrichtung wahlweise in die Steckaufnahmen einführbar und aus diesen wieder zurückziehbar sind.

Wenn die mindestens eine Rastklinke L-förmig ausgebildet ist, kann sie ein keilförmig ausgebildetes freies Ende aufweisen. Dabei kann die mindestens eine L-förmige Rastklinke an ihrer längeren Seite mit dem freien Ende eine Anlaufschräge aufweisen, die zu der kürzeren der beiden Seiten der Rastklinke hin ansteigt. Auf diese Weise wird erreicht, dass mit dem Hineinschieben der Rastklinke in die Steckaufnahme ein ansteigender Anpressdruck über die Rastklinke bereitgestellt wird. Aufgrund der L-förmigen Geometrie kann die Rastklinke dabei unter elastischer Verformung einen Anpressdruck bereitstellen. In Verbindung mit einem Anschlag des Schiebers, über den er an dem Gehäuse in der Verriegelungsposition zur Anlage kommt, kann ein reproduzierbarer Anpressdruck erreicht werden.

Die Rastklinke kann in der Freigabeposition des Schiebers über ihre von einer Spitze des freien Endes abgewandte Rückseite an einer Anlagefläche des Unterteils anliegen. Auf diese Weise wird eine definierte Stellposition des Schiebers für die haptische Anzeige der Freigabeposition bereitgestellt.

Die mindestens eine Steckaufnahme kann im Querschnitt senkrecht zu der Vorschubrichtung des Schiebers von der Freigabeposition in die Verriegelungsposition eine V-förmige, eine U-förmige oder eine O-förmige Geometrie aufweisen. Grundsätzlich sind auch andere Geometrien geeignet, die einen Durchlass in der Vorschubrichtung des Schiebers für die Aufnahme der Rastklinke aufweisen.

Das Unterteil kann je Sammelschiene eine Mehrzahl sich paarweise unter Ausbildung eines Durchlasses für eine Sammelschiene unter einem Abstand gegenüberstehender Rippen aufweisen, wobei die Durchlässe zueinander ausgerichtet sind, so dass eine sich durch die Durchlässe hindurch erstreckende Sammelschiene formschlüssig in den Durchlässen aufgenommen ist. Bei gegebener mechanischer Festigkeit der Rippen können die Rippenpaare eine Anzahl und einen Abstand zueinander aufweisen, der so gewählt ist, dass die Rippen im Wesentlichen verwindungsfrei einer auf die Stromsammelschiene wirkenden erwarteten Lorenzkraft widerstehen.

Da das Unterteil je Stromsammelschiene ein Hakenelement aufweist, das die jeweilige Stromsammelschiene an dem Unterteil vorfixiert, wird die Montage weiter erleichtert, da nach dem Einlegen der Stromsammelschienen in das Unterteil und vor dem Auflegen des Oberteils auf das Unterteil die Stromsammelschienen bereits gegen Herausfallen gesichert sind. Die Hakenelemente können als Steckelemente ausgebildet sein, die werkzeuglos an dem Unterteil festgelegt und von diesem wieder entfernt werden können. Beispielsweise können die Hakenelemente lösbar in einer der jeweiligen Stromsammelschiene beigeordneten Rastaufnahme verrastet sein.

Dabei können die Hakenelemente zumindest mit einer die Stromsammelschiene überragenden Halteklinge in einen der Kontaktierungsdurchlässe hineinragen und dort formschlüssig aufgenommen sein. Dadurch sind die Halteklingen in der Längsrichtung der Stromsammelschiene definiert positioniert und im Übrigen behindern sie nicht das Aufsetzen des Oberteils und bedingen auch kein größeres Baumaß des Berührungsschutzgehäuses. Insbesondere wenn die Stromsammelschiene einen rechteckigen Querschnitt aufweist, kann vorgesehen sein, dass sie mit einer ihrer vier senkrecht aufeinander stehenden Außenseiten an der dem Unterteil zugewandten Unterseite des Oberteils anliegt.

Der Schieber kann sich in der Verriegelungsposition im Wesentlichen über die gesamte Höhe des Berührungsschutzgehäuses erstrecken und in der Freigabeposition über eine sich parallel zu der mindestens einen Stromsammelschiene erstreckende Außenseite des Berührungsschutzgehäuses mit einem Griffstück aus dem Berührungsschutzgehäuse herausragen. Auf diese Weise ist bereits optisch erkennbar, dass sich der Schieber in der Freigabeposition befindet und damit das Oberteil gegenüber dem Unterteil nicht oder nicht vollständig gesichert ist. Das Griffstück kann weiterhin einen Anschlag aufweisen, mit dem es in der Verriegelungsposition an der Außenseite anliegt. Auf diese Weise ist auch die Verriegelungsposition definiert, so dass ein übermäßiges Verlagern des Schiebers von der Freigabeposition über die Verriegelungsposition hinaus wirksam vermieden wird.

In einem Bereich zwischen benachbarten Stromsammelschienen kann das Oberteil eine Vertiefung aufweisen, deren Boden bis zu einer Montageseite des Unterteils heranreicht, mit der das Unterteil auf einer Auflage, vorzugsweise auf einer Montageplatte, zur Anlage gebracht werden kann, wobei das Oberteil mit dem Unterteil und der Auflage über ein sich durch den Boden und die Montageseite bis in die Auflage hinein erstreckendes Befestigungsmittel verbunden ist.

Gemäß einem anderen Aspekt wird ein Verfahren für die Installation eines Stromsammelschienensystems der zuvor beschriebenen Art vorgeschlagen, das die Schritte aufweist:
- Montieren des Unterteils auf einer Auflage, vorzugsweise auf einer vertikalen Montageplatte;
- Einlegen mindestens einer Stromsammelschiene in das Unterteil, wobei die Stromsammelschiene formschlüssig in dem Unterteil aufgenommen wird;
- Auflegen des Oberteils auf das Unterteil und Überführen des Schiebers von der Freigabeposition in die Verriegelungsposition, wodurch das Oberteil an dem Unterteil festgelegt und dadurch die Stromsammelschiene zwischen dem Oberteil und dem Unterteil gehalten wird, wobei nach dem Einlegen der mindestens einen Stromsammelschiene in das Unterteil und vor dem Auflegen des Oberteils auf das Unterteil die Stromsammelschiene mit einem Hakenelement an dem Unterteil vorfixiert wird.

Weitere Einzelheiten der Erfindung werden anhand der nachstehenden Figuren erläutert. Dabei zeigt:
- Figur 1: eine Querschnittsansicht einer beispielhaften Ausführungsform eines erfindungsgemäßen Stromsammelschienensystems;
- Figur 2: eine perspektivische Darstellung einer weiteren Ausführungsform eines erfindungsgemäßen Stromsammelschienensystems;
- Figur 3: eine Draufsicht auf das Stromsammelschienensystem gemäß Figur 2;
- Figur 4: eine beispielhafte Ausführungsform eines Schiebers;
- Figur 5: eine Draufsicht auf die Rückseite eines Unterteils gemäß einer beispielhaften Ausführungsform; und
- Figur 6: eine perspektivische Ansicht der Rückseite eines Oberteils gemäß einer beispielhaften Ausführungsform.

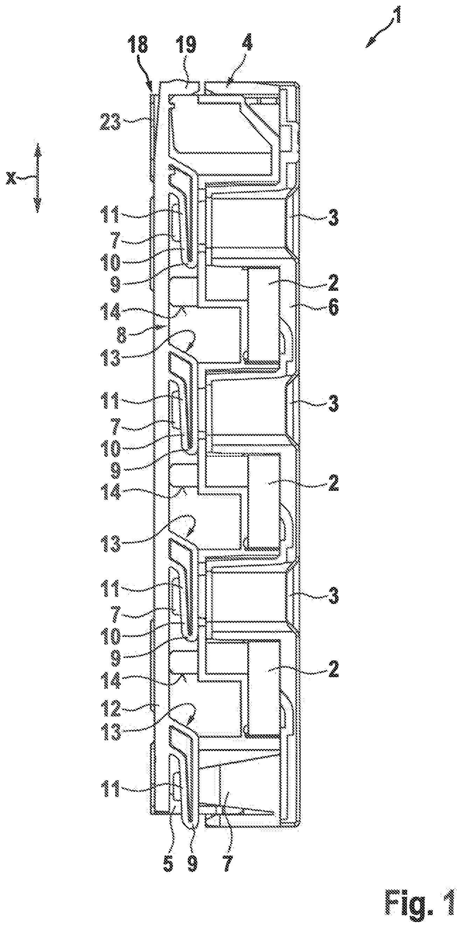

Die Querschnittsansicht gemäß Figur 1 zeigt eine beispielhafte Ausführungsform eines Stromsammelschienensystems 1, welches im Wesentlichen aus einem Berührungsschutzgehäuse 4 besteht, in dem drei Stromsammelschienen 2 aufgenommen sind. Die Stromsammelschienen 2 sind über Kontaktierungsdurchlässe 3 von der Vorderseite des Gehäuses 4 zugänglich, so dass elektrische Geräte und Geräteadapter mit hakenförmigen Halteelementen nach dem Einsetzen über die Kontaktierungsdurchlässe 3 die Sammelschienen 2 hintergreifen können.

Analog zu dem aus der WO 2017/182033 A1 bekannten Stromsammelschienensystem kann die Kontaktierung der Stromsammelschienen über ein separates Kontaktelement der Geräte beziehungsweise Geräteadapter bereitgestellt sein, so dass die über die Durchlässe 3 hindurchtretenden und die Sammelschienen 2 hintergreifenden Halteelemente tatsächlich lediglich eine haltende Funktion aufweisen. Geeignete einpolige Kontaktklemmen sind beispielsweise auch in der EP 3 258 558 B1 beschrieben.

Nachdem das Gerät beziehungsweise der Geräteadapter über die Durchlässe 3 durch das Oberteil 6 des Gehäuses in das Gehäuse 4 eingesetzt worden ist, kann das Gerät beziehungsweise der Adapter vertikal nach unten verlagert werden, so dass es oder er die Stromsammelschienen 2 hintergreift. Bei der in Figur 1 dargestellten Ausführungsform ist das Stromsammelschienensystem dreipolig ausgebildet und kann somit beispielsweise zur Kontaktierung dreipoliger Geräteadapter verwendet werden.

Das Gehäuse 4 besteht im Wesentlichen aus dem bereits genannten Oberteil 6 und einem Unterteil 5, zwischen denen die Sammelschienen 2 aufgenommen sind, wobei das Oberteil 6 lösbar mit dem Unterteil 5 verbunden ist. Dazu ist vorgesehen, dass das Oberteil 6 an seiner dem Unterteil 5 zugewandten Seite eine Mehrzahl sich von dieser Seite in das Unterteil 5 hinein erstreckende Steckaufnahmen 7 aufweist. Die Steckaufnahmen 7 sind V-förmig bzw. sich zu ihrem freien Ende hin verjüngend ausgebildet und weisen in der Vorschubrichtung x des Schiebers 8 durchlässige Öffnungen auf. Der Schieber 8 ist in das Unterteil 5 eingesetzt und weist eine Mehrzahl Rastklinken 9 auf. In der Darstellung gemäß Figur 1 ist der Schieber in der Verriegelungsposition angeordnet, in der die Rastklinken 9 in die Steckaufnahme 7 eingreifen und so das Oberteil 6 an dem Unterteil 5 festlegen. Demgegenüber sind die Rastklinken 9 in einer Freigabeposition, in welcher der Schieber 8 gegenüber der in Figur 1 dargestellten Position nach oben verlagert ist, den Steckaufnahmen vorgelagert, so dass das Oberteil 6 von dem Unterteil 5 abgehoben werden kann und damit die Stromsammelschienen 2 frei zugänglich sind und gegebenenfalls aus dem Unterteil 5 entnommen werden können.

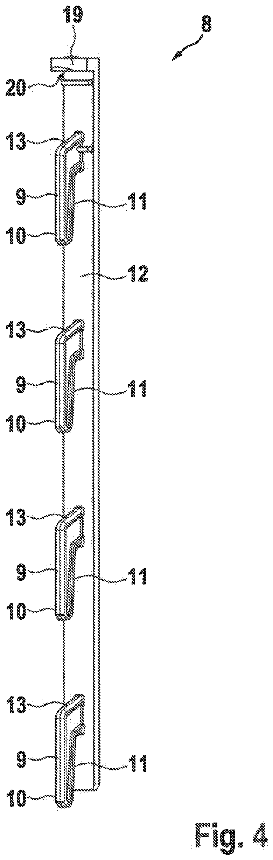

Die Rastklinken 9 zeigen mit ihrem jeweiligen freien Ende 10 in die Vorschubrichtung x des Schiebers 8, entlang welcher der Schieber von der Freigabe- in die Verriegelungsposition verlagert werden kann. Die Rastklinken 9 sind L-förmig ausgebildet und mit ihrem kürzeren Ende an einer geraden Schieberplatte 12 festgelegt. Dies ist im Detail in Figur 4 dargestellt. Das freie Ende 10 der Rastklinken 9 ist keilförmig ausgebildet, wobei die Rastklinke 9 an ihrem freien Ende 10 eine Anlaufschräge 11 aufweist, die zu einer kürzeren der beiden Seiten der L-förmigen Rastklinke 9 hin ansteigt. In der Freigabeposition des Schiebers 8 liegt die Rastklinke 9 über ihre von der Spitze des freien Endes abgewandte Rückseite 13 an einer Anlagefläche 14 (siehe Figur 1) des Unterteils 5 an, so dass eine präzise Definition der Freigabeposition des Schiebers 8 gegeben ist.

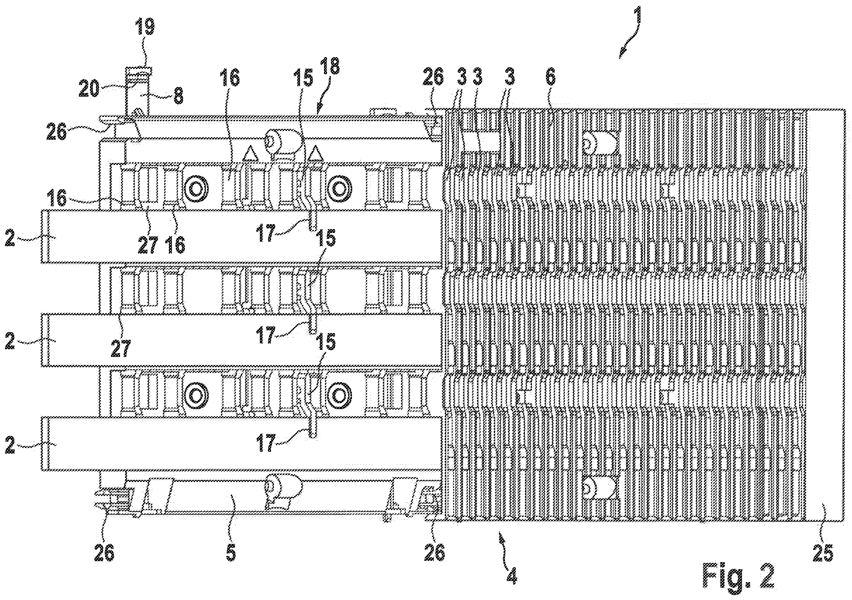

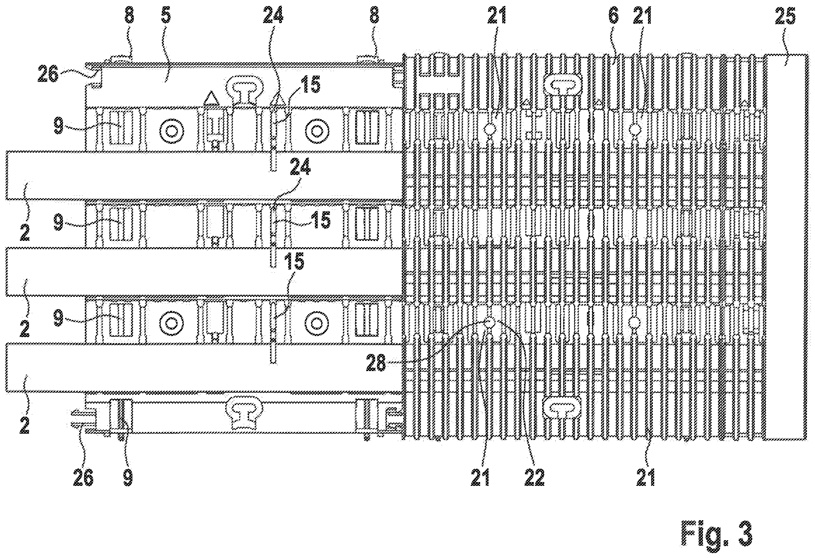

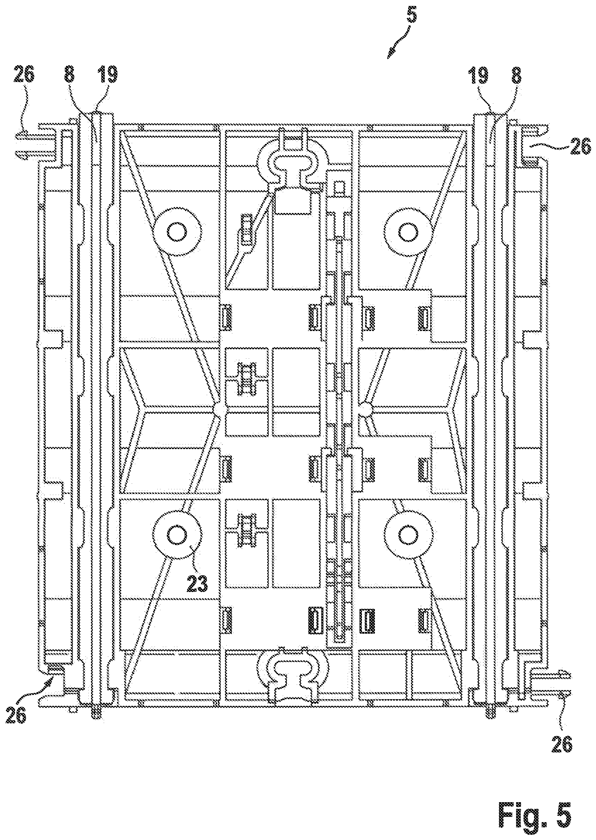

Wie in den Figuren 2 und 3 gezeigt ist, kann der Schieber 8, wenn er von der Freigabeposition (Figur 2) in die Verriegelungsposition (Figur 3) verlagert wird, über seinen Anschlag 20 an einer Außenseite 18 des Gehäuses 4 anliegen, so dass auch eine präzise Definition der Verriegelungsposition gegeben ist. Die Figuren 2 und 3 zeigen weiterhin, dass Hakenelemente 15 vorgesehen sind, um die Stromsammelschienen 2 bei abgenommenem Oberteil 6 an dem Unterteil 5 vorzufixieren. Dazu können nach dem Einlegen der Stromsammelschienen 2 in das Unterteil 5 die Hakenelemente 15 in entsprechende Rastaufnahmen 24 im Unterteil 5 eingerastet werden. Das Hakenelement 15 weist eine die Stromsammelschiene 2 überragende Halteklinge 17 auf, die bei auf dem Unterteil 5 aufgesetztem Oberteil 6 formschlüssig in einem der Kontaktierungsdurchlässe 3 des Oberteils 6 aufgenommen werden kann, so dass die Hakenelemente 15 einerseits präzise angeordnet sind und andererseits die Bauhöhe des Stromsammelschienensystems 1 nicht erhöhen. In einem Bereich zwischen benachbarten Stromsammelschienen 2 weist das Oberteil 6 eine Vertiefung 21 auf, deren Boden 22 bis zu einer Montageseite 23 (siehe Figur 5) des Unterteils 5 heranreicht, mit der das Unterteil 5 auf einer Auflage, beispielsweise auf einer Montageplatte zur Anlage gebracht werden kann. Das Oberteil 6 und das Unterteil 5 weisen jeweils eine Bohrung 28 auf, so dass das Oberteil 6 mit dem Unterteil 5 und der Auflage über ein sich durch die Bohrungen 28 in dem Boden 22 und der Montageseite 23 bis in die Auflage hinein erstreckendes Befestigungsmittel verbunden werden kann.

Das Berührungsschutzgehäuse 4 ist modular aufgebaut und weist an den gegenüberliegenden Längsenden komplementäre Rastverbinder 26 auf, die eine beliebige Erweiterung des Stromsammelschienensystems erlauben. Endseitig ist eine Endkappe 25 vorgesehen, welche die freien Enden der Stromsammelschienen 2 berührsicher verdeckt.

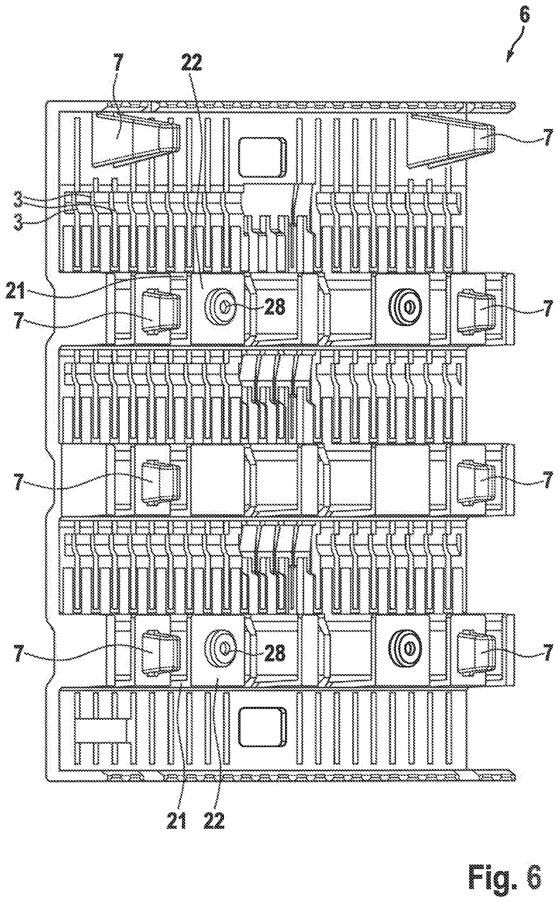

Wie in Figur 6 gezeigt ist, können die Steckaufnahmen 7 an der Unterseite des Oberteils 6 in Form von einteilig an das Oberteil 6 angeformten V-förmigen Körpern ausgebildet sein, deren Durchlassöffnungen miteinander fluchten und in der Vorschubrichtung x (vergleiche Figur 1) des Schiebers 8 durchlässig sind. Ebenso stehen an der Unterseite des Oberteils 6 die Vertiefungen 21 über ihre Bodenseiten 25 mit der Bohrung 28 hervor, um bei auf dem Unterteil 5 aufgesetztem Oberteil 6 bis an die Montageseite 23 des Unterteils 5 heranzureichen (vergleiche Figur 1).

### Bezugszeichenliste:

- 1: Stromsammelschienensystem
- 2: Stromsammelschiene
- 3: Kontaktierungsdurchlass
- 4: Berührungsschutzgehäuse
- 5: Unterteil
- 6: Oberteil
- 7: Steckaufnahme
- 8: Schieber
- 9: Rastklinke
- 10: freies Ende
- 11: Anlaufschräge
- 12: Schieberplatte
- 13: Rückseite
- 14: Anlagefläche
- 15: Hakenelement
- 16: Rippe
- 17: Halteklinge
- 18: Außenseite
- 19: Griffstück
- 20: Anschlag
- 21: Vertiefung
- 22: Boden
- 23: Montageseite
- 24: Rastaufnahme
- 25: Endkappe
- 26: Rastverbinder
- 27: Durchlass
- 28: Bohrung
- x: Vorschubrichtung

## Patentansprüche

1. Stromsammelschienensystem (1) mit mindestens einer Stromsammelschiene (2), die berührungssicher und über Kontaktierungsdurchlässe (3) für elektrische Geräte und/oder Geräteadapter zugänglich in einem Berührungsschutzgehäuse (4) aufgenommen ist, wobei das Berührungsschutzgehäuse (4) ein Unterteil (5) und ein auf dem Unterteil (5) lösbar festgelegtes Oberteil (6) aufweist, zwischen denen die mindestens eine Stromsammelschiene (2) gehalten ist, **dadurch gekennzeichnet, dass** das Oberteil (6) an seiner dem Unterteil (5) zugewandten Seite eine Mehrzahl sich von dieser in das Unterteil (5) hinein erstreckender Steckaufnahmen (7) und das Unterteil (5) mindestens einen Schieber (8) mit mindestens einer Rastklinke (9) aufweist, der zwischen einer Verriegelungsposition, in der die mindestens eine Rastklinke (9) in die Steckaufnahme (7) eingreift, und einer Freigabeposition, in der die mindestens eine Rastklinke (9) der Steckaufnahme (7) vorgelagert ist, verstellbar ist, wobei das Unterteil (5) je Stromsammelschiene (2) ein Hakenelement (15) aufweist, das die jeweilige Stromsammelschiene an dem Unterteil (5) vorfixiert.

2. Stromsammelschienensystem (1) nach Anspruch 1, bei dem der Schieber (8) eine Mehrzahl der Rastklinken (9) aufweist, die mit ihrem jeweiligen freien Ende (10) in eine Vorschubrichtung (x) des Schiebers (8) von der Freigabe- in die Verriegelungsposition zeigen.

3. Stromsammelschienensystem (1) nach Anspruch 1 oder 2, bei dem die mindestens eine Rastklinke (9) L-förmig ausgebildet ist und mit einer ersten, vorzugsweise der kürzeren ihrer beiden Seiten an einer geraden Schieberplatte (12) des Schiebers (8) festgelegt ist.

4. Stromsammelschienensystem (1) nach einem der vorangegangenen Ansprüche, bei dem die mindestens eine Rastklinke (9) L-förmig ausgebildet ist und ein keilförmig ausgebildetes freies Ende (10) aufweist.

5. Stromsammelschienensystem (1) nach Anspruch 3 oder 4, bei dem die mindestens eine L-förmige Rastklinke (9) an ihrer längeren Seite mit dem freien Ende (10) eine Anlaufschräge (11) aufweist, die zu der kürzeren der beiden Seiten der Rastklinke (9) hin ansteigt.

6. Stromsammelschienensystem (1) nach einem der Ansprüche 3 bis 5, bei dem die Rastklinke (9) in der Freigabeposition des Schiebers (8) über ihre von einer Spitze des freien Endes (10) abgewandte Rückseite (13) an einer Anlagefläche (14) des Unterteils (5) anliegt.

7. Stromsammelschienensystem (1) nach einem der vorangegangenen Ansprüche, bei dem die mindestens eine Steckaufnahme (7) im Querschnitt senkrecht zu einer Vorschubrichtung (x) des Schiebers (8) von der Freigabe- in die Verriegelungsposition eine U-förmige oder O-förmige Geometrie aufweist.

8. Stromsammelschienensystem (1) nach einem der vorangegangenen Ansprüche, bei dem das Unterteil (5) je Sammelschiene (2) eine Mehrzahl sich paarweise unter Ausbildung eines Durchlasses (27) für eine Sammelschiene (2) unter einem Abstand gegenüberstehender Rippen (16) aufweist, wobei die Durchlässe (27) zueinander ausgerichtet sind, so dass eine sich durch die Durchlässe (27) hindurch erstreckende Sammelschiene (2) formschlüssig in den Durchlässen (27) aufgenommen ist, wobei bei gegebener mechanischer Festigkeit der Rippen (16) die Rippenpaare eine Anzahl und einen Abstand zueinander aufweisen, der so gewählt ist, dass die Rippen (16) im Wesentlichen verwindungsfrei einer auf die Stromsammelschiene (2) wirkenden erwarteten Lorenzkraft widerstehen.

9. Stromsammelschienensystem (1) nach Anspruch 1, bei dem das Hakenelement (15) lösbar in einer der jeweiligen Stromsammelschiene (2) beigeordneten Rastaufnahme (24) verrastet ist.

10. Stromsammelschienensystem (1) nach Anspruch 1, bei dem das Hakenelement (15) zumindest mit einer die Stromsammelschiene (2) überragenden Halteklinge (17) in einen der Kontaktierungsdurchlässe (3) hineinragt und dort formschlüssig aufgenommen ist.

11. Stromsammelschienensystem (1) nach einem der vorangegangenen Ansprüche, bei dem sich der Schieber (8) in der Verriegelungsposition im Wesentlichen über die gesamte Höhe des Berührungsschutzgehäuses (4) erstreckt und in der Freigabeposition über eine sich parallel zu der mindestens einen Stromsammelschiene (2) erstreckende Außenseite (18) des Berührungsschutzgehäuse (4) mit einem Griffstück (19) aus dem Berührungsschutzgehäuse (4) herausragt.

12. Stromsammelschienensystem (1) nach Anspruch 11, bei dem das Griffstück (19) einen Anschlag (20) aufweist, mit dem es in der Verriegelungsposition an der Außenseite (18) anliegt.

13. Stromsammelschienensystem (1) nach einem der vorangegangenen Ansprüche, bei dem in einem Bereich zwischen benachbarten Stromsammelschienen (2) das Oberteil (6) eine Vertiefung (21) aufweist, deren Boden (22) bis zu einer Montageseite (23) des Unterteils (5) heranreicht, mit der das Unterteil (5) auf einer Auflage, vorzugsweise auf einer Montageplatte, zur Auflage gebracht werden kann, wobei das Oberteil (6) mit dem Unterteil (5) und der Auflage über ein sich durch den Boden (22) und die Montageseite (23) bis in die Auflage hinein erstreckendes Befestigungsmittel verbunden ist.

14. Verfahren für die Installation eines Stromsammelschienensystem (1) nach einem der vorangegangen Ansprüche, das die Schritte aufweist:
- Montieren des Unterteils (5) auf einer Auflage, vorzugsweise auf einer vertikalen Montageplatte;
- Einlegen mindestens einer Stromsammelschiene (2) in das Unterteil (5), wobei die Stromsammelschiene (2) formschlüssig in dem Unterteil (5) aufgenommen wird;
- Auflegen des Oberteils (6) auf das Unterteil (5) und Überführen des Schiebers (8) von der Freigabeposition in die Verriegelungsposition, wodurch das Oberteil (6) an dem Unterteil (5) festgelegt und dadurch die Stromsammelschiene (2) zwischen dem Oberteil (6) und dem Unterteil (5) gehalten wird,
wobei nach dem Einlegen der mindestens einen Stromsammelschiene (2) in das Unterteil (5) und vor dem Auflegen des Oberteils (6) auf das Unterteil (5) die Stromsammelschiene (2) mit einem Hakenelement (15) an dem Unterteil (5) vorfixiert wird.

## Claims

1. A bus bar system (1) having at least one bus bar (2) which is accommodated in a contact protection housing (4) protected against contact and accessible via contacting passages (3) for electrical devices and/or device adapters, the contact-protection housing (4) having a lower part (5) and an upper part (6) which is detachably fixed on the lower part (5) and between which the at least one bus bar (2) is held, **characterized in that** the upper part (6) has, on its side facing the lower part (5), a plurality of plug-in receptacles (7) extending from the latter into the lower part (5), and the lower part (5) has at least one slider (8) with at least one latching pawl (9) which can be adjusted between a locking position, in which the at least one latching pawl (9) engages in the plug-in receptacle (7), and a release position, in which the at least one latching pawl (9) is positioned in front of the plug-in receptacle (7), wherein the lower part (5) comprises, for each bus bar (2), a hook element (15) which pre-fixes the respective bus bar to the lower part (5).

2. The bus bar system (1) according to claim 1, wherein said slider (8) comprises a plurality of said latching pawls (9) having their respective free ends (10) pointing in an advancing direction (x) of said slider (8) from said releasing position to said locking position.

3. The bus bar system (1) according to claim 1 or 2, wherein the at least one latching pawl (9) is L-shaped and is fixed with a first, preferably the shorter, of its two sides to a straight slider plate (12) of the slider (8).

4. The bus bar system (1) according to any one of the preceding claims, wherein the at least one latching pawl (9) is L-shaped and has a wedge-shaped free end (10).

5. The bus bar system (1) according to claim 3 or 4, wherein the at least one L-shaped latching pawl (9) has on its longer side with the free end (10) a run-up slope (11) rising towards the shorter of the two sides of the latch (9).

6. The bus bar system (1) according to any one of claims 3 to 5, in which, in the release position of the slider (8), the latching pawl (9) rests against an abutment surface (14) of the lower part (5) via its rear side (13) facing away from a tip of the free end (10).

7. The bus bar system (1) according to any one of the preceding claims, wherein the at least one plug-in receptacle (7) has a U-shaped or O-shaped geometry in cross-section perpendicular to an advancement direction (x) of the slider (8) from the release position to the locking position.

8. The bus bar system (1) according to one of the preceding claims, in which the lower part (5) has, for each bus bar (2), a plurality of ribs (16) which face one another in pairs, forming a passage (27) for a bus bar (2), at a distance apart, the passages (27) being aligned with one another so that a bus bar (2) extending through the passages (27) is positively received in the passages (27), wherein, for a given mechanical strength of the ribs (16), the pairs of ribs have a number and spacing from each other selected such that the ribs (16) resist, substantially without distortion, an expected Lorenz force acting on the bus bar (2).

9. The bus bar system (1) according to claim 1, wherein the hook element (15) is releasably latched in a latching receptacle (24) associated with the respective bus bar (2).

10. The bus bar system (1) according to claim 1, wherein the hook element (15) projects into one of the contacting passages (3) at least with a retaining blade (17) projecting beyond the bus bar (2) and is positively received therein.

11. The bus bar system (1) according to any one of the preceding claims, wherein in the locking position the slider (8) extends substantially over the entire height of the contact protection housing (4) and in the release position protrudes from the contact protection housing (4) with a handle piece (19) over an outer side (18) of the contact protection housing (4) extending parallel to the at least one bus bar (2).

12. The bus bar system (1) according to claim 11, wherein the handle piece (19) comprises a stop (20) with which it abuts the outer side (18) in the locking position.

13. The bus bar system (1) according to one of the preceding claims, in which, in a region between adjacent bus bars (2), the upper part (6) has a recess (21), the bottom (22) of which extends as far as a mounting side (23) of the lower part (5), with which the lower part (5) can be brought to rest on a support, preferably on a mounting plate, the upper part (6) being connected to the lower part (5) and the support via a fastening means extending through the bottom (22) and the mounting side (23) into the support.

14. A method for the installation of a bus bar system (1) according to any one of the preceding claims, comprising the steps of:
- Mounting the lower part (5) on a support, preferably on a vertical mounting plate;
- Inserting at least one bus bar (2) into the lower part (5), wherein the bus bar (2) is positively received in the lower part (5);
- Placing the upper part (6) on the lower part (5) and transferring the slider (8) from the release position to the locking position, whereby the upper part (6) is fixed to the lower part (5) and thereby the bus bar (2) is held between the upper part (6) and the lower part (5),
wherein after the insertion of the at least one bus bar (2) into the lower part (5) and before the upper part (6) is placed on the lower part (5), the bus bar (2) is prefixed to the lower part (5) with a hook element (15).

## Revendications

1. Système de barre omnibus électrique (1) avec au moins une barre omnibus électrique (2) qui est logée avec une sécurité anti-contact et par l'intermédiaire de passages de mise en contact (3) pour des appareils électriques et/ou des adaptateurs d'appareils, de manière accessible, dans un boîtier de protection anti-contact (4), dans lequel le boîtier de protection anti-contact (4) comprend une partie inférieure (5) et une partie supérieure (6) fixée de manière amovible sur la partie inférieure (5), entre lesquelles l'au moins une barre omnibus électrique (2) est maintenue, **caractérisé en ce que** la partie supérieure (6) comprend, au niveau de son côté orienté vers la partie inférieure (5), une pluralité de logements d'enfichage (7) s'étendant à partir de celle-ci vers l'intérieur de la partie inférieure (5) et la partie inférieure (5) comprend au moins un curseur (8) avec au moins un cliquet (9) qui peut être déplacé entre une position de verrouillage, dans laquelle l'au moins un cliquet (9) s'emboîte dans le logement d'enfichage (7), et une position de déverrouillage, dans laquelle l'au moins un cliquet (9) est placé en amont du logement d'enfichage (7), dans lequel la partie inférieure (5) comprend, pour chaque barre omnibus électrique (2), un élément de type crochet (15) qui fixe préalablement la barre omnibus électrique correspondante à la partie inférieure (5).

2. Système de barre omnibus électrique (1) selon la revendication 1, dans lequel le curseur (8) comprend une pluralité de cliquets (9) qui pointent, avec leur extrémité libre (10) respective, dans une direction d'avance (x) du curseur (8) de la position de déverrouillage vers la position de verrouillage.

3. Système de barre omnibus électrique (1) selon la revendication 1 ou 2, dans lequel l'au moins un cliquet (9) présente une forme de L et est fixé, avec un premier côté, de préférence le plus court des deux côtés, à une plaque de curseur droite (12) du curseur (8).

4. Système de barre omnibus électrique (1) selon l'une des revendications précédentes, dans lequel l'au moins un cliquet (9) présente une forme de L et comprend une extrémité libre (10) cunéiforme.

5. Système de barre omnibus électrique (1) selon la revendication 3 ou 4, dans lequel l'au moins un cliquet (9) en forme de L comprend, au niveau de son côté le plus long, avec l'extrémité libre (10), un chanfrein d'entrée (11) qui monte en direction du plus court des deux côtés du cliquet (9).

6. Système de barre omnibus électrique (1) selon l'une des revendications 3 à 5, dans lequel le cliquet (9) s'appuie, dans la position de déverrouillage du curseur (8), par l'intermédiaire de son côté arrière (13) opposé à une pointe de l'extrémité libre (10), contre une surface d'appui (14) de la partie inférieure (5).

7. Système de barre omnibus électrique (1) selon l'une des revendications précédentes, dans lequel l'au moins un logement d'enfichage (7) présente, en section transversale perpendiculairement à une direction d'avance (x) du curseur (8) de la position de déverrouillage vers la position de verrouillage, une géométrie en forme de U ou en forme de O.

8. Système de barre omnibus électrique (1) selon l'une des revendications précédentes, dans lequel la partie inférieure (5) comprend, pour chaque barre omnibus électrique (2), une pluralité de nervures (16) qui se font face par paires, à une certaine distance, en formant un passage (27) pour une barre omnibus électrique (2), dans lequel les passages (27) sont orientés les uns vers les autres, de sorte qu'une barre omnibus électrique (2) s'étendant à travers les passages (27) soit logée par complémentarité de forme dans les passages (27), dans lequel, lors d'une résistance mécanique donnée des nervures (16), les paires de nervures présentent un nombre et une distance entre elles qui sont choisis de façon à ce que les nervures (16) résistent globalement sans torsion à la force de Lorentz attendue qui agit sur la barre omnibus électrique (2).

9. Système de barre omnibus électrique (1) selon la revendication 1, dans lequel l'élément de type crochet (15) est encliqueté de manière amovible dans un logement d'encliquetage (24) correspondant à la barre omnibus électrique (2).

10. Système de barre omnibus électrique (1) selon la revendication 1, dans lequel l'élément de type crochet (15) pénètre, au moins avec une lame de maintien (17) dépassant de la barre omnibus électrique (2), dans un des passages de mise en contact (3) et y est logé par complémentarité de forme.

11. Système de barre omnibus électrique (1) selon l'une des revendications précédentes, dans lequel le curseur (8) s'étend, dans la position de verrouillage, globalement sur toute la hauteur du boîtier de protection anti-contact (4) et, dans la position de déverrouillage, dépasse, sur un côté externe (18) du boîtier de protection anti-contact (4), s'étendant parallèlement à l'au moins une barre omnibus électrique (2), avec une poignée (19), hors du boîtier de protection anti-contact (4).

12. Système de barre omnibus électrique (1) selon la revendication 11, dans lequel la poignée (19) comprend une butée (20) avec laquelle elle s'appuie, dans la position de verrouillage, contre le côté externe (18).

13. Système de barre omnibus électrique (1) selon l'une des revendications précédentes, dans lequel, dans une zone entre des barres omnibus électriques (2) adjacentes, la partie supérieure (6) comprend un renfoncement (21) dont le fond (22) arrive jusqu'à un côté de montage (23) de la partie inférieure (5), avec lequel la partie inférieure (5) peut être mise en appui sur une surface d'appui, de préférence une plaque de montage, dans lequel la partie supérieure (6) est reliée avec la partie inférieure (5) et le surface d'appui par l'intermédiaire d'un moyen de fixation s'étendant à travers le fond (22) et le côté de montage (23) jusque dans la surface d'appui.

14. Procédé pour l'installation d'un système de barre omnibus électrique (1) selon l'une des revendications précédentes, qui comprend les étapes suivantes :
- montage de la partie inférieure (5) sur une surface d'appui, de préférence sur une plaque de montage verticale ;
- insertion d'au moins une barre omnibus électrique (2) dans la partie inférieure (5), dans lequel la barre omnibus électrique (2) est logée par complémentarité de forme dans la partie inférieure (5) ;
- pose de la partie supérieure (6) sur la partie inférieure (5) et déplacement du curseur (8) de la position de déverrouillage vers la position de verrouillage, ce qui permet de fixer la partie supérieure (6) à la partie inférieure (5) et permet donc de maintenir la barre omnibus électrique (2) entre la partie supérieure (6) et la partie inférieure (5),
dans lequel, après l'insertion de l'au moins une barre omnibus électrique (2) dans la partie inférieure (5) et avant la pose de la partie supérieure (6) sur la partie inférieure (5), la barre omnibus électrique (2) est préalablement fixée avec un élément de type crochet (15) à la partie inférieure (5).
